# EUROPEAN PATENT APPLICATION

(11) **EP 2 183 981 A1**
(43) Date of publication of application: **12.05.2010**
(21) Application number: 08751988.0
(22) Date of filing: 23.04.2008
(51) Int. Cl.: A23J 3/16, A23J 3/34

(54) **METHOD OF PRODUCING ACIDIC-SOLUBLE SOYBEAN PROTEIN**

(30) Priority: 26.04.2007 JP 2007116520
(71) Applicant: Fuji Oil Company, Ltd., Osaka-shi, Osaka 542-0086 (JP)
(72) Inventor: SAITO, Tsutomu, Izumisano-shi Osaka 598-8540 (JP); KATASE, Mitsuru, Izumisano-shi Osaka 598-8540 (JP)
(74) Representative: Hayes, Adrian Chetwynd
(86) International application number: PCT/JP2008/057858
(87) International publication number: WO 2008/136326

(57) **Abstract**

It is intended to provide a soybean protein material which has an excellent taste without showing astringency or bitterness and satisfies physicochemical characteristics required for acidic foods and drinks, for example, low viscosity, high solubility and high stability. In the process for producing an acidic-soluble soybean protein, an additional step, wherein a soybean protein-containing solution is digested with protease at a pH value higher than the isoelectric point of soybean protein and then the pH value is adjusted to a level lower than the isoelectric point of soybean protein, is conducted. Thus, astringency can be significantly reduced while preventing the generation of undesirable bitterness. The TCA (0.22 M) solubilization rate of the acidic-soluble soybean protein thus obtained is preferably 10% or more, while the phytic acid content of the acidic-soluble soybean protein thus obtained is preferably 0.5% by weight or less.

## Description

### Technical Field

The present invention relates to a method of producing an acidic-soluble soybean protein for acidic foods and drinks, which has an excellent taste.

### Background Art

An isolated soybean protein, a soybean protein material obtained by isolating from soybean, has very low solubility at pH around 3 to 4.5 which is equal to its isoelectric point although it is a pH suitable for foods and drinks. Therefore, in order to make a soybean protein an acidic aqueous solution, various efforts have been made. In Patent Document 1, a soybean protein is heated to 250 to 320°F (121 to 160°C) under acidic conditions of pH 2.0 to 4.2, whereby the solubility of soybean protein in acid conditions is increased. In Patent Document 2, an isolated soybean protein is subjected to phytase treatment and subsequently subjected to heat treatment at high temperature under acidic conditions, whereby the solubility of the soybean protein in acidic conditions is greatly increased.

Acidic aqueous solutions of protein such as milk whey protein and acidic soybean protein have a problem that astringency is felt in the mouth upon ingesting (Non-Patent Document 1). It is attributed to an isoelectric point precipitation of the protein and it is possible to be avoided by reducing the molecular weight of the protein. Patent Document 3 describes an acidic beverage using soybean protein, the solubility of soybean protein in acidic conditions is increased by removing phytic acid from the soybean protein, and further, the generation of astringency is suppressed by partial hydrolysis of the protein. However, while the hydrolysis of the protein suppresses astringency, it has a problem that bitterness is enhanced. An acidic-soluble soybean protein of which astringency and bitterness are both suppressed has been still not obtained.
Patent Document 1: JP 53-19669 B
Patent Document 2: WO02/067690
Patent Document 3: US 2005/0202147 A1
Non-Patent Document 1: Annual Meeting of Japan Society for Bioscience, Biotechnology, and Agrochemistry 2006, Meeting Summaries, page 58 (2J13p04)

### Disclosure of Invention

### Problems to be Solved by the Invention

The object of the present invention is to provide a method of producing an acidic-soluble soybean protein for acidic foods and drinks, which has an excellent taste with reduced astringency and bitterness.

### Means for Solving the Problems

Since the conventional acidic-soluble soybean protein is much used in an acidic environment, the finished product is also prepared to be acidic. Therefore, the acidic heat treatment, phytase treatment and digestion treatment with protease described above have been all carried out at a pH lower than the isoelectric point of soybean protein. The present inventors have found that, in the process for producing an acidic-soluble soybean protein, astringency can be significantly reduced with preventing the generation of undesirable bitterness by adding a step, wherein a soybean protein-containing solution is purposely digested with protease at a pH higher than the isoelectric point of soybean protein in spite of recognizing a problem that the ash content of the finished product increases, and then the pH is adjusted to a level lower than the isoelectric point of soybean protein. Thus, the present inventors have completed the present invention. Thus, the present invention is:
(1) A method of producing an acidic-soluble soybean protein, which comprises that a soybean protein-containing solution is digested with protease at a pH higher than the isoelectric point of soybean protein, and then the pH is adjusted to a level lower than the isoelectric point of soybean protein;
(2) The method of producing an acidic-soluble soybean protein according to (1), wherein the soybean protein-containing solution is a solution containing an isolated soybean protein;
(3) The method of producing an acidic-soluble soybean protein according to (1), wherein the obtained acidic-soluble soybean protein has a TCA (0.22 M) solubility of 10% or more and 70% or less;
(4) The method of producing an acidic-soluble soybean protein according to (1), wherein the removal or inactivation treatment of phytic acid is carried out in any step;
(5) The method of producing an acidic-soluble soybean protein according to (4), wherein the phytic acid content of the obtained acidic-soluble soybean protein is 0.5% by weight or less; and
(6) The method of producing an acidic-soluble soybean protein according to (1), wherein the heat treatment is carried out at a temperature higher than 100°C at a pH lower than the isoelectric point of soybean protein.

### Effect of the Invention

According to the present invention, a soybean protein material which has an excellent taste with less astringency and bitterness and satisfies physicochemical characteristics required for acidic foods and drinks, such as low viscosity, high solubility and high stability, can be provided.

### Best Mode for Carrying Out the Invention

### (Definition of Acidic-Soluble Soybean Protein)

Hereinafter, the present invention will be concretely described. The acidic-soluble soybean protein used in the present invention is defined as a soybean protein having an NSI in diluted acid, which is obtained by the modified NSI method described below, of 90% or more and a TCA (0.22 M) solubility of 70% or less.

### (Soybean Raw Material)

The acidic-soluble soybean protein of the present invention is produced as follows. First, selecting a raw material, a soybean raw material used here refers to those that can be a raw material for extracting soybean protein containing okara (insoluble fiber content), such as whole soybean, defatted soybean, and concentrated soybean protein. In general, defatted soybean subjected to low-temperature extraction with n-hexane as an extraction solvent is suitable as a starting material. In particular, low-denatured defatted soybean having an NSI (Nitrogen Solubility Index) of 60% or more and preferably 80% or more is preferable. Alternatively, an acid concentrated soybean protein (acid concentrate) obtained by adding an acid water having a pH around the isoelectric point of protein to the defatted soybean to remove the whey component can be also used.

### (Extraction of Protein)

Protein is extracted from the soybean raw material described above. While the extraction can be carried out with water or warm water over a wide pH range from acidic to weak alkaline, an extraction around the isoelectric point of soybean protein is not preferable since the solubility is lowered. The extraction under extreme acidic or alkaline conditions increases salts due to the subsequent pH adjustment. Therefore, an extraction around pH 3 or around neutral pH is preferable, and an extraction around neutral pH is the most preferable. From the extracted slurry, an insoluble fraction, okara, is separated by centrifugation or filtration, to collect soybean milk that is a protein solution.

This soybean milk may be used as a soybean protein-containing solution. Preferably, an acid or alkali is added to the soybean milk, and an isolated soybean protein collected as an isoelectric point precipitation of the protein is again dispersed in water, to adjust the pH and then used as a soybean protein-containing solution. The soybean protein-containing solution can be adjusted to a pH higher than the isoelectric point of soybean protein, preferably a pH higher than 5, and further preferably a pH higher than 6, to make ready for the subsequent protease treatment. The upper limit of the pH of the soybean protein-containing solution is not particularly defined. However, since the problems of color degradation, generation of lysinoalanine and the like are also considered at high pH, pH 9 or lower is preferable, and pH 8 or lower is particularly preferable. In addition, as the soybean protein-containing solution, a solution obtained by dissolving the usually available isolated soybean protein powder into water and then adjusting to the above-described pH range may be used as the soybean protein-containing solution.

In either case, when the protease treatment described below is carried out at a pH lower than the isoelectric point, bitterness is generated by protein degradation, and the desired effect of the present application cannot be obtained. Incidentally, the isoelectric point of soybean protein used in the present invention means a pH in which a whole charge of soybean protein comprising a single protein molecule or plural protein molecules is the smallest. For example, this pH can be obtained as a range showing zero zeta potential by zeta potential measurements. In the case of normal soybean protein, the isoelectric point is from around 4.5 to 5.0.

### (Protease Treatment)

Subsequently, the soybean protein-containing solution is treated with protease. As the protease used in the present invention, endoproteases, which are enzymes that hydrolyze a peptide bond in a peptide or a protein combining amino acids in chains into several peptides, are preferable. The type is not particularly limited, and any protease such as microbially-derived acidic protease, neutral protease and alkaline protease, animal-derived protease and plant-derived protease can be used, and it is important to exhibit an activity at a pH higher than the isoelectric point of soybean protein. In addition, it is preferable that the soybean protein-containing solution be treated at a temperature higher than 100°C before protease treatment. When using a classification method based on the type of the active central amino acid, preferable protease includes an enzyme comprising metal protease as a main component or an enzyme comprising cysteine protease as a main component, and the most preferable protease includes an enzyme comprising metal protease as a main component. These enzymes are used alone or together with other protease, whereby the taste of acidic-soluble soybean protein to be obtained can be further improved.

Also, it is possible to use in combination one or more exoproteases that are enzymes sequentially cleaving amino acids, peptides or the like from the amino terminus and the carboxy terminus existing in the end of protein or peptide. The digestion with the above-described protease increases bitterness while astringency of the protein is reduced according to the progress of digestion. The degree of digestion is, as the TCA (0.22 M) solubility, preferably 10% or more, and particularly preferably from 15% to 60%. In less than 10%, astringency is not sufficiently reduced. In higher than 70%, the reduction of the molecular weight progresses, and the use of the protein is restricted from the viewpoint of properties and tastes, and at the same time, bitterness increases, therefore, it does not match the object of the present application.

### (Acid Addition Treatment)

An acid is further added to adjust to a pH lower than the isoelectric point of soybean protein. The acid used here may be any acid used for foods and is not limited. For example, the acid can include mineral acids such as hydrochloric acid, sulfuric acid and phosphoric acid, and organic acids such as citric acid, malic acid, tartaric acid, lactic acid, gluconic acid, fumaric acid, succinic acid, acetic acid and oxalic acid, and two or more acids may be mixed and used. In addition, the pH needs to be adjusted to a pH lower than the isoelectric point of soybean protein, and the pH is desired to be adjusted to pH 4.5 or lower, preferably pH 4.3 or lower, and further preferably pH 4.0 or lower. A method of pH adjustment is not particularly limited. However, since the soybean protein solution has a buffering action, pH adjustment with an organic acid requires a large amount of acid, therefore the amount of crude protein in the final product is reduced. It is possible to increase the amount of crude protein by using a mineral acid.

### (Acid Solubilization Treatment)

In order to make the above-described soybean protein into an acidic-soluble soybean protein, an acid solubilization treatment is required. The acid solubilization treatment for preparing an acidic-soluble soybean protein used in the present invention is not particularly limited, and the production method and the like disclosed in WO2002/67690, JP 53-19669 B and the like can be used. For example, (A) treatment for removing or inactivating phytic acid derived from a raw material protein in the solution containing soybean protein by phytase or the like, (B) treatment for adding a polycationic substance such as chitosan in the solution containing soybean protein, (C) treatment of heating the solution containing soybean protein at a temperature higher than 100°C in a range more acidic than the pH of the isoelectric point of the protein, and the like are carried out alone or in combination, whereby the dissolution rate of the soybean protein under acidic conditions can be increased. These acid solubilization treatments can be carried out in any step before or after the above-described protease treatment at a pH higher than the isoelectric point or the subsequent adjustment treatment to a pH lower than the isoelectric point.

Which acid solubilization treatment method is carried out also depends on the pH or forms of acidic foods and drinks. With the treatment of (C) alone, the soluble acidic pH is narrow such as pH around 2 to 3.5. Therefore, in order to solubilize the protein in a wider pH range, the treatment of (A) and/or (B) is effective. When the treatment of (C) is carried out after carrying out the treatment of (A) and/or (B), the protein is soluble in a wide acidic pH range, and soy protein of which aqueous solution has high transparency, which is preferably used as a drink, can be obtained. A method comprising the steps of carrying out the protease treatment at a pH higher than the isoelectric point, thereafter adjusting the solution to acidic, carrying out the phytase treatment, and then carrying out the heat treatment at high temperature is the most efficient and preferable.

### (Treatment for Removal/Inactivation of Phytic Acid)

The treatment of above-described (A) will be described in detail. The method of treatment for removal or inactivation of phytic acid used in the present invention is not particularly limited, and a known method can be used. For example, the method includes membrane treatment such as dialysis, ultrafiltration and electrodialysis, and ionexchange resin treatment, and the like. A desired and practical treatment for reducing phytic acid includes a method using phytase that is an enzyme or enzyme preparation having a phytic acid-degrading activity. The origin of the phytase used in the present invention is not particularly limited as long as the enzyme or enzyme preparation having a phytic acid-degrading activity. However, it is desired to use microbially-derived phytase for the present invention, as compared to plant-derived phytase, since the former generally has a higher phytic acid-degrading activity and a lower co-existing protease activity.

In the practice of the present invention, the smaller the amount of phytic acid is, the higher the acid solubilization effect is. While a curd slurry or the like obtained by isoelectric point precipitation of an extraction liquid obtained by extracting defatted soybeans with water to remove okara normally contains about 2% by weight of phytic acid based on the weight of protein, it is desired to reduce phytic acid to 0.5% by weight or less, and preferably 0.25% by weight or less based on the weight of protein. Conditions of the phytase treatment for achieving the above-described value are not particularly limited. For example, the conditions include a reaction pH of 2.5 to 7.5, a reaction temperature of 20 to 70°C, a reaction time of 5 minutes to 3 hours, and a phytase additive amount of 0.1 to 100 units/g, preferably 0.5 to 50 units/g, based on the solid content. However, there is no difficulty in carrying out the reaction under conditions outside of the above ranges as long as denaturation and decomposition of protein can be avoided. When the treatment needs to be carried out within a shorter period of time, higher units of the enzyme may be added for the treatment. One unit of phytase activity represents the amount of an enzyme releasing 1 µmol of phosphoric acid from the substrate, phytic acid, during 1 minute of the initial stage of the reaction under standard conditions (pH 5.5, 37°C). The degree of degradation of phytic acid and salt thereof is obtained by directly measuring the phytic acid content in the solution according to the method of Alii Mohamed (Cereal Chemistry, 63, 475, 1986).

### (Heat Treatment at Lower Than Isoelectric Point)

In the heat treatment in the present invention, the solution containing soybean protein is adjusted to the appropriate concentration, preferably a solid content of 3 to 18% by weight and further preferably a solid content of 8 to 14% by weight, and adjusted to a pH lower than the isoelectric point of soybean protein, preferably to pH from 2.3 to 4.3, and heated at a temperature higher than 100°C, preferably at 160°C or less, and further preferably at 105°C to 145°C. In the case of a pH lower than 2.3, while a protein solution having high transparency can be obtained, an amount of an acid used markedly increases and it may affect to the taste of the protein. In the case of a pH higher than 4.3, the solution tends to be cloudy and is liable to form aggregation. In the case of a solid content of lower than 3% by weight, although there is no problem in quality, operation efficiency tends to decrease. In the case of a solid content of 18% by weight or higher, viscosity of the protein solution markedly increases, and operability in subsequent steps tends to be deteriorated. However, when the degradation of the soybean protein to be heated is progressed, the effect of the increase in viscosity is small, and its concentration can be also increased.

In the case of a heating temperature of 100°C or lower, solubilization of the protein in acidic conditions is insufficient. In the case of higher than 160°C, functions and nutrition of the protein are likely to be deteriorated due to cleavage of peptide bonds or the like, therefore, it is undesirable. The heating time is not particularly limited and may be from several seconds to 60 minutes, while heating for a too long time may affect qualities such as taste. Any heating system can be employed, and a continuous direct heat sterilization apparatus with a steam injection system can be exemplified as the desired system. This apparatus can heat to a high temperature to over 100°C momentarily by a system of blowing steam into a liquid flowing through a tube.

### (Drying)

The solution containing soybean protein subjected to the above-described acid solubilization treatment can be obviously used in the form of solution as is or, in order to enhance convenience for use, the solution can be powdered. In this case, the resulting solution is dried preferably at pH 4.5 or lower to be powdered. When the pH upon drying is over 4.5, solubility in acidic conditions of the resulting powder being redissolved is lowered, therefore, it is undesirable. A drying method is not particularly limited, and a spray drying apparatus and the like are preferred. The soybean protein obtained by the present invention is solubilized at pH 3.5 to 4.5 of which normal protein is low solubility. Particularly, the solution having high transparency can be obtained from a defatted raw material.

Analysis methods used for the present invention are described below.
*Amount of Crude Protein: Amount of the crude protein was obtained by obtaining the nitrogen content based on Kjeldal method and multiplying the nitrogen content by a factor of 6.25, and was shown as anhydrous basis.
*Taste: A 5% aqueous solution was prepared, and its "astringency" and "bitterness" were assessed by sensory evaluation. Sensory evaluation was carried out with 20 panelists, based on the scales of; "not detectable" [0 point], "almost not detectable" [1 point], "detectable but not unpleasant" [2 points], "detectable (unpleasant)" [3 points], "strongly detectable" [4 points], and "very strongly detectable" [5 points]; and the average of points was shown.
*NSI (Nitrogen Solubility Index): Based on AOCS (American Oil Chemist's Society) official method BA-11-65 NSI, NSI was analyzed as follows. The 3.5 g of powdered soybean protein was weighted, and 100 ml of water was added. The mixture was stirred with a propeller (500 rpm) for 10 minutes, and filtered with No.5A filter paper. Nitrogen (determined by the Kjeldahl method) in the filtrate was expressed in percentage of nitrogen in the soybean protein.

* Modified NSI Method (that uses diluted acid): In the above-described NSI measurement method, citric acid was added after stirring with a propeller to adjust the solution to pH 3.5, and the quantity of dissolved protein was determined.
*TCA (0.22 M) Solubility: To 2% by weight of aqueous solution of protein composition, an equivalent amount of 0.44 M trichloroacetic acid (TCA) was added, and the rate of soluble protein was determined by the Kjeldahl method. When the degradation of protein progresses, the TCA solubility increases.

### Examples

Examples will be described hereinafter, but the technical thought of the present invention is not limited to these exemplifications.

### (Example 1) Preparation of Neutral Protease Digested Acidic-Soluble Soybean Protein

Soybeans were pressed into flakes, and the oil was extracted, separated and removed by using n-hexane as an extraction solvent to give low-denatured defatted soybeans (NSI: 91). To 1 part by weight of the resulting defatted soybeans was added 7 parts by weight of water, and the mixture was adjusted to pH 7 with a diluted sodium hydroxide solution and extracted at room temperature for 1 hour with stirring. Thereafter, the mixture was centrifuged at 4,000 × g, and okara and insoluble matter were separated to give defatted soybean milk. The defatted soybean milk was adjusted to pH 4.5 with phosphoric acid and thereafter centrifuged at 2,000 × g using a continuous centrifugal separator (decanter) to give an insoluble fraction (acid precipitated curd) and a soluble fraction (whey). Water was added to the acid precipitated curd so as to have a solid content of 10% by weight, to give an acid precipitated curd slurry A. The acid precipitated curd slurry A is also used in the following Examples, Comparative Examples, and Test Examples.

The acid precipitated curd slurry A was adjusted to pH 6.5 with a diluted sodium hydroxide solution and then warmed to 50°C. To this solution was added a protease ("Protamex" manufactured by Novozymes) in an amount of 0.16 AU (Anson Units) per 100 g of the solid content, and the hydrolysis was carried out for 60 minutes. After the reaction, the reactant was heated at 85°C for 20 minutes to deactivate the enzyme. To this hydrolysate (TCA (0.22 M) solubility of 33%) was added phosphoric acid to adjust the hydrolysate to pH 3.5, and thereafter a phytase ("Phytase Novo" manufactured by Novozymes) was added in an amount corresponding to 8 units per 100 g of the solid content, and the reaction was carried out for 30 minutes. The reactant was heated with a continuous direct heat sterilization apparatus at 140°C for 7 seconds and spray-dried to give a powdered acidic-soluble soybean protein. The resulting powdered acidic-soluble soybean protein had a TCA (0.22 M) solubility of 33% and an NSI in diluted acid of 97%. Each of the contents of sodium, phosphoric acid and phytic acid was 0.9% by weight, 3.0% by weight and 0.2% by weight, and the amount of crude protein was 87% by weight.

### (Comparative Example 1) Preparation of Undigested Acidic-Soluble Soybean Protein

The acid precipitated curd slurry A of Example 1 was adjusted to pH 3.5 with phosphoric acid and then warmed to 50°C. To this solution was added the phytase described in Example 1 in an amount corresponding to 8 units per the solid content, and the enzymatic reaction was carried out at pH 3.5 for 30 minutes. After the reaction, the reactant was heated with a continuous direct heat sterilization apparatus at 140°C for 7 seconds and spray-dried to give a powdered acidic-soluble soybean protein. The resulting powdered acidic-soluble soybean protein had a TCA (0.22 M) solubility of 4.5% and an NSI in diluted acid of 97%. Each of the contents of sodium, phosphoric acid and phytic acid was 0.1% by weight, 1.5% by weight and 0.2% by weight, and the amount of crude protein was 92% by weight.

### (Comparative Example 2) Preparation of Acidic Protease Digested Acidic-Soluble Soybean Protein

The acid precipitated curd slurry A of Example 1 was adjusted to pH 3.5 with phosphoric acid and then warmed to 50°C. To this solution was added a 0.6% microbially-derived protease ("Sumizyme AP" manufactured by SHIN NIHON CHEMICAL CO., LTD.) per the solid content, and the hydrolysis was carried out for 60 minutes. After the reaction, the reactant was heated at 85°C for 20 minutes to deactivate the enzyme. The hydrolysate (TCA (0.22 M) solubility of 33%) was adjusted to pH 3.5, and the phytase described in Example 1 was added in an amount corresponding to 8 units per the solid content, and the enzymatic reaction was carried out at pH 3.5 for 30 minutes. After the reaction, the reactant was heated with a continuous direct heat sterilization apparatus at 140°C for 7 seconds and spray-dried to give a powdered acidic-soluble soybean protein. The resulting powdered acidic-soluble soybean protein had a TCA (0.22 M) solubility of 33% and an NSI in diluted acid of 97%. Each of the contents of sodium, phosphoric acid and phytic acid was 0.1% by weight, 1.6% by weight and 0.2% by weight, and the amount of crude protein was 91% by weight.

The sensory evaluation was carried out on the acidic-soluble soybean proteins obtained in Example 1 and Comparative Examples 1 and 2 (Table 1). In Comparative Example 1, astringency was very strong. In Comparative Example 2 obtained by hydrolysis with protease reaction at pH 4.5 or lower, astringency decreased but was still in a level of feeling unpalatable, and bitterness increased to a level of feeling unpalatable. Therefore, it was found that the taste level of both proteins was low. On the other hand, in Example 1 obtained by hydrolysis with protease reaction at a pH higher than the isoelectric point of soybean protein, astringency decreased to a level of not unpalatable, and an unpalatable level of bitterness did not generate. It was found from the above results that the hydrolysis with protease reaction at a pH higher than the isoelectric point of soybean protein could markedly improve the taste level of the acidic-soluble soybean proteins. Incidentally, as an evaluation hereinafter, it was represented as "Δ" in the case where either one of astringency and bitterness is 3.0 or more, as "×" in the case where both are 3.0 or more, or as "××" in the case where either one is 4.0 or more, and while not accompanied by the numeric value for evaluation, it was represented as "○" in the case where the taste was sensuously good, as "⊙" in the case where the taste was further good, or as "⊙⊙" in the case where the taste was very good.

**(Table 1) Comparison of Taste of Each Acidic-Soluble Soybean Protein**

| | Protease Treatment | TCA (%) | NSI in diluted acid (%) | Composition (%) | | | | Sensory Evaluation | | |
|---|---|---|---|---|---|---|---|---|---|---|
| | | | | CP | Na | Phosphoric Acid | Phytic Acid | Astringency | Bitterness | Evaluation |
| Example 1 | pH 6.5/Protamex | 33 | 97 | 87 | 0.9 | 3.0 | 0.2 | 2.3 | 18 | ○ |
| Comparative Example 1 | Undigested | 4.5 | 97 | 92 | 0.1 | 1.2 | 0.2 | 4.5 | 0.8 | ×× |
| Comparative Example 2 | pH 3.5/Sumizyme AP | 33 | 97 | 91 | 0.1 | 1.6 | 0.2 | 3.4 | 3.5 | × |

### (Test Example 1) Investigation of Protease Reaction pH and Taste

The acid precipitated curd slurry A of Example 1 was equally divided into three, and each was adjusted to pH 5.5, 6.5, or 7.5 with a diluted sodium hydroxide solution and then warmed to 50°C. To these solutions was added the protease described in Example 1 in an amount properly adjusted so that the hydrolysates have a TCA (0.22 M) solubility from 30 to 40% at each pH, and the hydrolysis was carried out for 60 minutes. After the reaction, the reactants were heated to 85°C for 20 minutes to deactivate the enzyme. Subsequently, to each hydrolysate was added phosphoric acid to adjust the hydrolysate to pH 3.5, and thereafter the phytase described in Example 1 was added in an amount corresponding to 8 units per 100 g of the solid content, and the reaction was carried out for 30 minutes. The reactants were heated with a continuous direct heat sterilization apparatus at 140°C for 7 seconds and spray-dried to give various powdered acidic-soluble soybean protein. As a result of sensory evaluation (Table 2), it was found that protease digestion at pH higher than 5 could reduce both astringency and bitterness. In the conditions that the soybean protein is hydrolyzed by protease at a pH higher than the isoelectric point of soybean protein, a taste-improving effect could be obtained at any reaction pH.

**(Table 2) Comparison of Digestion pH and Taste of Acidic-Soluble Soybean Protein**

| | Protease Treatment | TCA (%) | Sensory Evaluation | | |
|---|---|---|---|---|---|
| | | | Astringency | Bitterness | Evaluation |
| Test Example 1 | pH 5.5/Protamex | 30-40 | 2.3 | 1.9 | ⊙ |
| ↑ | pH 6.5/Protamex | 30-40 | 2.3 | 1.8 | ⊙ |
| ↑ | pH 7.5/Protamex | 30-40 | 2.1 | 1.9 | ⊙ |

### (Test Example 2) Investigation of TCA (0.22 M) Solubility and Taste

The acid precipitated curd slurry A of Example 1 was adjusted to pH 6.5 with a diluted sodium hydroxide solution and then warmed to 50°C. To this solution was added the protease described in Example 1 in varied amounts, and the hydrolysis was carried out for 60 minutes. After the reaction, the reactants were heated to 85°C for 20 minutes to deactivate the enzyme. Subsequently, phosphoric acid was added to adjust the reactants to pH 3.5, and thereafter the phytase described in Example 1 was added in an amount corresponding to 8 units per 100 g of the solid content, and the reaction was carried out for 30 minutes. The reactants were heated with a continuous direct heat sterilization apparatus at 140°C for 7 seconds and spray-dried to give powdered acidic-soluble soybean proteins. The resulting powdered acidic-soluble soybean proteins had TCA (0.22 M) solubilities of 7.2%, 11.5%, 16.8%, 33.0%, 47.0%, 66.0%, and 73.0%.

The result of sensory evaluation (Table 3) showed that the degree of hydrolysis by protease affected astringency and bitterness, and as the increase in the hydrolysis degree, astringency was reduced, and bitterness increased. The proteins having TCA (0.22 M) solubilities from 11.5% to 66.0% did not have unpalatable levels of astringency and bitterness. Astringency somewhat remained in the protein having a TCA (0.22 M) solubility of 7.2%. Astringency was acceptable but bitterness was too strong in the protein having a TCA (0.22 M) solubility of 73.0%. The proteins having TCA (0.22 M) solubilities of 16.8%, 33.0% and 47.0% had a good balance of astringency and bitterness and were particularly preferable.

**(Table 3) Comparison of Digestion Degree and Taste of Acidic-Soluble Soybean Protein**

| | Protease Treatment | TCA (%) | Sensory Evaluation | | |
|---|---|---|---|---|---|
| | | | Astringency | Bitterness | Evaluation |
| Comparative Example 1 | Undigested | 4.5 | 4.5 | 0.8 | ×× |
| Test Example 2 | pH 6.5/Protamex | 7.2 | 3.6 | 1.0 | △ |
| ↑ | ↑ | 11.5 | 2.8 | 1.2 | ○ |
| ↑ | ↑ | 16.8 | 2.5 | 1.3 | ⊙ |
| ↑ | ↑ | 33.0 | 2.3 | 1.8 | ⊙ |
| ↑ | ↑ | 47.0 | 2.0 | 2.2 | ⊙ |
| ↑ | ↑ | 66.0 | 1.8 | 2.7 | ○ |
| ↑ | ↑ | 73.0 | 1.8 | 3.6 | × |

### (Test Example 3) Investigation of Types of Protease

The acid precipitated curd slurry A of Example 1 was adjusted to pH 6.5 with a diluted sodium hydroxide solution and then warmed to 50°C. To this solution was added one of five types of proteases, (1) Protease N (manufactured by Amano Enzyme Inc.), (2) Alcalase (manufactured by Novozymes), (3) Proleather FG-F (manufactured by Amano Enzyme Inc.), (4) Papain W-40 (manufactured by Amano Enzyme Inc.) and (5) Newlase F3G (manufactured by Amano Enzyme Inc.) in an amount preliminarily adjusted so that the hydrolysates have a TCA (0.22 M) solubility of about 35%, and the hydrolysis was carried out for 60 minutes. After the reaction, the reactants were heated at 85°C for 20 minutes to deactivate the enzyme. Subsequently, phosphoric acid was added to adjust the reactants to pH 3.5, and thereafter the phytase described in Example 1 was added in an amount corresponding to 8 units per 100 g of the solid content, and the reaction was carried out for 30 minutes. The reactants were heated with a continuous direct heat sterilization apparatus at 140°C for 7 seconds and spray-dried to give powdered acidic-soluble soybean proteins. The resulting powdered acidic-soluble soybean proteins had TCA (0.22 M) solubilities of 32%, 36%, 35%, 35%, and 34%.

As a result of sensory evaluation (Table 4), it was shown that all proteases could significantly reduce astringency, and unpalatable bitterness was not generated. Protease N classified into metal protease tended to have a little higher level of reducing astringency and generating less bitterness than other proteases, such as serine proteases (Alcalase, Proleather), cysteine proteases (Papain), and acidic proteases (Newlase).

**(Table 4) Comparison of Digestion Degree and Taste of Acidic-Soluble Soybean Protein**

| | Protease Treatment | TCA (%) | Sensory Evaluation | | |
|---|---|---|---|---|---|
| | | | Astringency | Bitterness | Evaluation |
| Test Example 3 | pH 6.5/Protease N | 32 | 2.3 | 1.9 | ⊙ |
| ↑ | pH 6.5/Alcalase | 36 | 2.8 | 2.7 | ○ |
| ↑ | pH 6.5/Proleather FG-F | 35 | 2.7 | 2.5 | ○ |
| ↑ | pH 6.5/Papain W-40 | 35 | 2.5 | 2.2 | ○ |
| ↑ | pH 6.5/Newlase F3G | 34 | 2.5 | 2.8 | ○ |

### (Example 2) Acid-Solubilized Soybean Protein Obtained by Neutral Protease Digestion Followed by Acidic Heat Treatment Alone

The acid precipitated curd slurry A of Example 1 was adjusted to pH 6.5 with a diluted sodium hydroxide solution and then warmed to 50°C. To this solution was added the protease of Example 1 in an amount of 0.16 AU (Anson Units) per 100 g of the solid content, and the hydrolysis was carried out for 60 minutes. After the reaction, the reactant was heated at 85°C for 20 minutes to deactivate the enzyme. To this hydrolysate (TCA (0.22 M) solubility of 33%) was added phosphoric acid to adjust the hydrolysate to pH 3.5, thereafter heated with a continuous direct heat sterilization apparatus at 140°C for 7 seconds and spray-dried to give a powdered acidic-soluble soybean protein. The resulting powdered acidic-soluble soybean protein had a TCA (0.22 M) solubility of 33% and an NSI in diluted acid of 92%. Each of the contents of sodium, phosphoric acid and phytic acid was 1.0% by weight, 3.0% by weight and 2.5% by weight, and the amount of crude protein was 86% by weight.

### (Example 3) Acid-Solubilized Soybean Protein Obtained by Neutral Protease Digestion Followed by Phytase Treatment Alone

The acid precipitated curd slurry A of Example 1 was adjusted to pH 6.5 with a diluted sodium hydroxide solution and then warmed to 50°C. To this solution was added the protease of Example 1 in an amount of 0.16 AU (Anson Units) per 100 g of the solid content, and the hydrolysis was carried out for 60 minutes. After the reaction, the reactant was heated at 85°C for 20 minutes to deactivate the enzyme. To this hydrolysate (TCA (0.22 M) solubility of 33%) was added phosphoric acid to adjust the hydrolysate to pH 3.5, thereafter the phytase described in Example 1 was added in an amount corresponding to 8 units per 100 g of the solid content, and the reaction was carried out for 30 minutes. The reactant was heated with a batch indirect heat pasteurization apparatus at 90°C for 20 minutes. The resulting powdered acidic-soluble soybean protein had a TCA (0.22 M) solubility of 33% and an NSI in diluted acid of 90%. Each of the contents of sodium, phosphoric acid and phytic acid was 1.0% by weight, 3.0% by weight and 0.2% by weight, and the amount of crude protein was 86% by weight.

### (Example 4) Acidic-Soluble Soybean Protein Obtained by First Heating Followed by Neutral Protease Digestion

The acid precipitated curd slurry A of Example 1 was adjusted to pH 6.5 with a diluted sodium hydroxide solution and thereafter heated with a continuous direct heat sterilization apparatus at 140°C for 7 seconds. The heat-treated solution was adjusted to 50°C, and the protease of Example 1 was added in an amount of 0.16 AU (Anson Units) per 100 g of the solid content, and the hydrolysis was carried out for 60 minutes. After the reaction, the reactant was heated at 85°C for 20 minutes to deactivate the enzyme. Subsequently, to this hydrolysate was added phosphoric acid to adjust the hydrolysate to pH 3.5, and thereafter the phytase described in Example 1 was added in an amount corresponding to 8 units per 100 g of the solid content, and the reaction was carried out for 30 minutes. The reactant was heated with a continuous direct heat sterilization apparatus at 140°C for 7 seconds and spray-dried to give a powdered acidic-soluble soybean protein. The resulting powdered acidic-soluble soybean protein had a TCA (0.22 M) solubility of 33% and an NSI in diluted acid of 97%. Each of the contents of sodium, phosphoric acid and phytic acid was 1.0% by weight, 3.0% by weight and 0.2% by weight, and the amount of crude protein was 86% by weight.

As a result of sensory evaluation (Table 5), it was shown that, even using different procedures of acid solubilization, levels of astringency and bitterness were the same. In addition, it was found that astringency could be further reduced by heat-treating the protein before protease reaction as Example 4.

**(Table 5) Comparison of Taste of Soybean Protein Subjected to Each of Acid Solubilization Treatments**

| | High Temperature Treatment Before Digestion | Protease Treatment | Phytase Treatment | Acidic High Temperature Treatment | TCA (%) | NSI in diluted acid (%) | Composition (%) | | | | Sensory Evaluation | | |
|---|---|---|---|---|---|---|---|---|---|---|---|---|---|
| | | | | | | | CP | Na | Phosphoric Acid | Phytic Acid | Astringency | Bitterness | Evaluation |
| Example 1 | - | pH 6.5/Protamex | + | + | 33 | 97 | 87 | 0.9 | 3.0 | 0.2 | 2.3 | 1.8 | ⊙ |
| Example 2 | - | ↑ | - | + | 33 | 92 | 86 | 1.0 | 3.0 | 2.5 | 2.3 | 1.8 | ⊙ |
| Example 3 | - | ↑ | + | - | 33 | 91 | 86 | 1.0 | 3.0 | 0.2 | 2.3 | 1.8 | ⊙ |
| Example 4 | + | ↑ | + | + | 33 | 97 | 86 | 1.0 | 3.0 | 0.2 | 1.8 | 2.0 | ⊙⊙ |

### (Example 5) Preparation of Acidic Powdered Drink

The amount 90 parts by weight of the powdered acidic-soluble soybean protein prepared in Example 1, 0.3 parts by weight of stevia product (Rebaudio ACK250: Morita Kagaku Kogyo Co., Ltd.), 7.7 parts by weight of lemon juice powder and 2 parts by weight of vitamin C were mixed well, to give a protein-containing acidic powdered drink. The amount 12 g of this powder was added to 200 ml of water, and the mixture was mixed well in a shaker. The drink was sensuously evaluated, and it was found that the drink had a suitable sourness, did not evoke astringency specific to the acidic-soluble soybean protein and also bitterness, had a good feeling when going down the throat and was excellent in palatability.

### Industrial Applicability

According to the present invention, the soybean protein material which has an excellent taste with less astringency and bitterness and satisfies physicochemical characteristics required for acidic foods and drinks, such as low viscosity, high solubility and high stability can be provided. The protein-containing acidic foods and drinks which have more excellent taste than the prior art can be produced by using the acidic-soluble soybean protein.

## Claims

1. A method of producing an acidic-soluble soybean protein, which comprises that a soybean protein-containing solution is digested with protease at a pH higher than the isoelectric point of soybean protein, and then the pH is adjusted to a level lower than the isoelectric point of soybean protein.

2. The method of producing an acidic-soluble soybean protein according to claim 1, wherein the soybean protein-containing solution is a solution containing an isolated soybean protein.

3. The method of producing an acidic-soluble soybean protein according to claim 1, wherein the obtained acidic-soluble soybean protein has a TCA (0.22 M) solubility of 10% or more and 70% or less.

4. The method of producing an acidic-soluble soybean protein according to claim 1, wherein the removal or inactivation treatment of phytic acid is carried out in any step.

5. The method of producing an acidic-soluble soybean protein according to claim 4, wherein the phytic acid content of the obtained acidic-soluble soybean protein is 0.5% by weight or less.

6. The method of producing an acidic-soluble soybean protein according to claim 1, wherein the heat treatment is carried out at a temperature higher than 100°C at a pH lower than the isoelectric point of soybean protein.
